# EUROPEAN PATENT APPLICATION

(11) **EP 4 716 154 A1**
(43) Date of publication of application: **25.03.2026**
(21) Application number: 24201765.5
(22) Date of filing: 20.09.2024
(51) Int. Cl.: H04L 9/40, H04L 69/16, H04L 47/40

(54) **SECURE MULTI-LINK SATELLITE COMMUNICATION SYSTEM**

(71) Applicant: Cysec SA, 1015 Lausanne (CH)
(72) Inventor: ROELVINK, Yannick, 1015 LAUSANNE (CH); HAAS, Loïc, 1015 LAUSANNE (CH); DI FEDE, Emmanuel, 1015 LAUSANNE (CH)
(74) Representative: Plasseraud IP

(57) **Abstract**

1. A method of providing a data connection to a remote device, the method comprising:
receiving incoming user data packets at a layer 2 LAN networking interface;
forwarding, by a network tunnel, TUN, interface the user data packets to one or more carrier protocol instances, wherein the each carrier protocol instance is selected from a plurality of carrier protocol instances, wherein each instance is configured to encode data with a specific carrier protocol;
processing data packets at each carrier protocol module instance, wherein the processing comprises:
deconstructing the received data packets, and
encapsulating the packet data into a data packet corresponding to the carrier protocol of the selected carrier protocol instance;
forwarding the encapsulated packets to the TUN interface; and
forwarding the encapsulated packets to a wide area network, WAN.

## Description

### Background

### Technical field

The present application relates to the provision of high-performance satellite communications. More specifically, the application relates to a system for the provision of a secure high-performance communications system, in particular a system employing multi orbit satellite communications. The application also relates to an associated apparatus for performing the method.

### Related art

Implementing encrypted communication over satellite links is often impractical since known techniques, such as VPN, significantly impact the performance of the link, typically increasing the latency.

A solution to this issue is known from EP4346255 wherein a hardware cryptoprocessor is employed to aid in encrypting payload data. However, such a system typically cannot be easily tailored to suit the need of different user types. Such different users may, for example have different requirements such as:
Operational requirements: In some cases, the end user might require the satellite communication link to have specific properties, which fall outside of the category of "regular" usage. An example would be that for online conferencing or live broadcasting, the client might require the link to prioritize network resilience for bandwidth, in order to reduce jitter and latency.

Security requirements: For other use cases, however, the clients might require enhanced security features, for example due to compliance regulation. An example of these would be the integration of Transmission Security (TRANSEC) techniques, which typically provide security on lower communication layers than an implementation based on QUIC.

Architecture requirements: Certain companies, institutions or ISPs may require specific communication protocols to be used within their network. Generally, the reason for this can be classified as either due to security, e.g. an enterprise firewall that blocks UDP traffic, or performance related, e.g. an ISP modem that provides higher priority for TCP traffic, possibly throttling the transfer speed of other communication protocols.

There is therefore a need for a system that can be easily adapted to fulfil such different user requirements.

It is an aim of the present invention to solve or mitigate at least some of the above-described problems.

### Summary

In a first aspect, there is provided a method of providing a data connection to a remote device, the method comprising:
receiving incoming user data packets at a layer 2 LAN networking interface;
forwarding, by a network tunnel, TUN, interface the user data packets to one or more carrier protocol module instances, wherein each carrier protocol module instance is selected from a plurality of carrier protocol modules, wherein each carrier protocol module is configured to encode data with a specific carrier protocol;
processing data packets at each carrier protocol module instance, wherein the processing comprises:
   deconstructing the received data packets, and
   encapsulating the packet data into a data packet corresponding to the carrier protocol of the selected carrier protocol instance;
   forwarding the encapsulated packets to the TUN interface; and
   forwarding the encapsulated packets to a wide area network, WAN.

By virtue of the method of the first aspect, a simple means of selecting different carrier protocols for use over a WAN connection can be provided. By using a modular approach, if a different carrier protocol is desired, then only the carrier protocol module need be changed. This implies that other elements of the software and hardware need not be altered when changing carrier protocol.

In some embodiments, the method further comprises:
forwarding, by the network tunnel, TUN, interface the data packets to a switchman interface, wherein the switchman interface is configured to pass TCP-encoded data packets to a performance-enhancing proxy, PEP, module and to pass data packets with encoding other than TCP to a carrier protocol instance;
processing TCP-encoded data packets by the PEP module; and
forwarding the processed packets to a carrier protocol module instance.

Thus, the claimed method can provide a means to differently deal with TCP-encoded data packets in comparison to other types of packet encoding.

In some embodiments, data packets other than TCP-encoded data packets are encapsulated with metadata that identifies a communication channel for the data packets. Thus, the method can provide means to address data packets.

In some embodiments, the method further comprises encrypting, by a carrier protocol module instance, the encapsulated packets using a key management system, KMS.

In some embodiments, the method provides that a plurality of carrier protocol module instances are instantiated, and each instance of the carrier protocol module is configured to communicate with the switchman interface via a communication path defined by the switchman interface. Thus, multiple connections for data transport can be supported.

In some embodiments, the carrier protocol used by each carrier protocol module instance is user-selectable. Thus, different connections can be configured to use different carrier protocols.

In some embodiments, the PEP module is capable of being selectively disabled for each logical connection via a user selection. Thus, the treatments of TCP data can be selected as appropriate for the particular connection since the PEP can be enabled or disabled for each connection as desired.

In some embodiments, the method, further comprises:
forwarding incoming user data packets to a Kernel Network Stack,
forwarding, by the kernel network stack, the user data packets to the TUN interface, and
forwarding, by the kernel network stack, the encrypted encapsulated packets to the WAN.

In some embodiments, the processing by the PEP module includes acceleration of the TCP-encoded data packets.

In some embodiments, the KMS is implemented in a hardware cryptoprocessor.

In some embodiments, the WAN comprises one or more of a geostationary, GEO, satellite link a low-earth orbit, LEO, satellite link a medium-earth orbit, MEO, satellite link, a cellular wireless connection, LTE connection, and caballed links such as. a fibre-optic link, a coaxial cable link and so forth. However, the WAN is not limited to any particular communication technology. In some embodiments, a congestion control algorithm applicable to each carrier protocol module instance is user-selectable.

In further aspects there is provided a computer program product comprising computer readable instructions which, when implemented on a system comprising a processor performs all of the steps of the method of the first aspect, and a computer readable medium comprising such a computer program.

In a further aspect, there is provided a communication device for providing a data connection to a remote device, the communication device comprising:
a layer 2 LAN networking interface;
a wide area network, WAN, interface; and
a processor configured to instantiate a network tunnel, TUN, interface and one or more carrier protocol module instances, wherein
the communication device is configured to receive incoming user data packets at the LAN networking interface; and wherein the processor is configured to:
forward, by the TUN interface the user data packets to a carrier protocol module instance, wherein each carrier protocol module instance is selected from a plurality of carrier protocol modules instances, wherein each carrier protocol module instance is configured to encode data with a specific carrier protocol;
process data packets at each carrier protocol module instance, wherein the processing comprises:
   deconstructing the received data packets, and
   encapsulating the packet data into a data packet corresponding to the carrier protocol of the selected carrier protocol instance;
   forward the encapsulated packets to the TUN interface; and
   forward the encapsulated packets to the WAN interface.

### Brief description of the drawings

The invention will now be described with reference to the accompanying Figures of which:
Figure 1a illustrates a use scenario for the communication device and method of providing a data connection according to embodiments of the disclosure;
Figure 1b illustrates an alternative use scenario for the communication device and method of providing a data connection according to embodiments of the disclosure;
Figure 2 illustrates a communication device according to an embodiment;
Figure 3 illustrates the action of a performance-enhancing proxy as employed in embodiments of the disclosure;
Figure 4 illustrates a communication device according to further embodiments;
Figure 5 illustrates the general method of operation of the secure router according to the embodiments of figure 2 or 4;

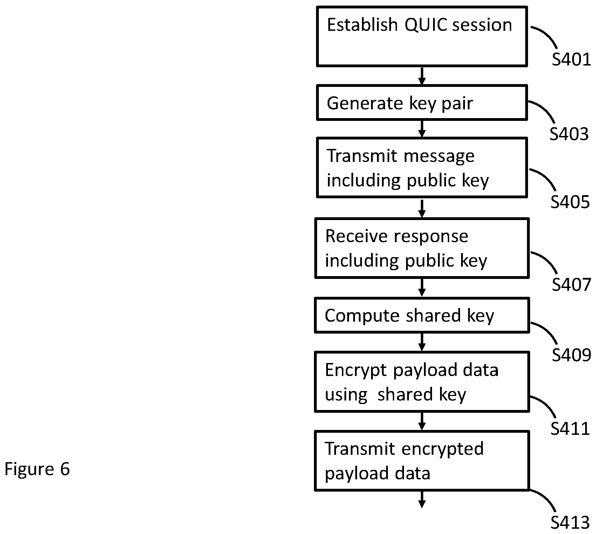

Figure 6 illustrates a method of encrypting data according to embodiments;
Figure 7 illustrates a method of encrypting data according to alternative embodiments; and
Figure 8 illustrates example results of employing an embodiment of the disclosure in comparison to prior art systems.

### Detailed Description

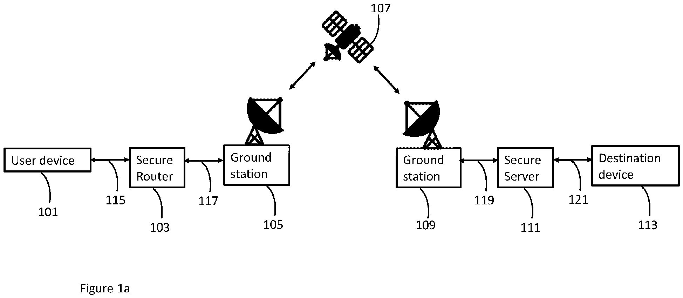

Figure 1a illustrates an example use scenario for the present disclosure, in which a user device 101 is in communication with a destination device 113 via a satellite 107. The user device 101 could be any type of user device, such as a computer workstation, laptop, mobile telephone, tablet computer or internet of things (IoT) device. The destination server 113, could be any server device that permits external communications, such as an internet server.

The user device 101 is configured to communicate 115 with a secure router 103 which is located between the user device 101 and a first ground station 105. The secure router 103 can be located at the premises of the first ground station 105, at the premises where the user device 101 is located, or at some other location. In some embodiments, the secure router 103 can form part of the user device 101. In other embodiments, the secure router 103 can form a part of a satellite modem located at the first ground station 105.

The communications will be enacted using one or more communications protocols that enable the transport of data from the user device 101 to the secure router 103 and then to the first satellite ground station 105. This transportation of data will typically occur via the internet and may be implemented in a wired or wireless manner, or in some combination of the two. The first satellite ground station 105 includes a modem device and will use this to transmit the data to the satellite 107, which in turn will transmit the data to a second ground station 109. The transmission of data between the satellite 107 and the ground stations 105, 109, can be achieved using Transmission Control Protocol, TCP, or another protocol, such as DVB or ATSC.

The second ground station 109 will transmit the data to a secure server 111 and then on to a destination device 113, again this transmission can be achieved using one or more communications protocols that enable the transport of data.

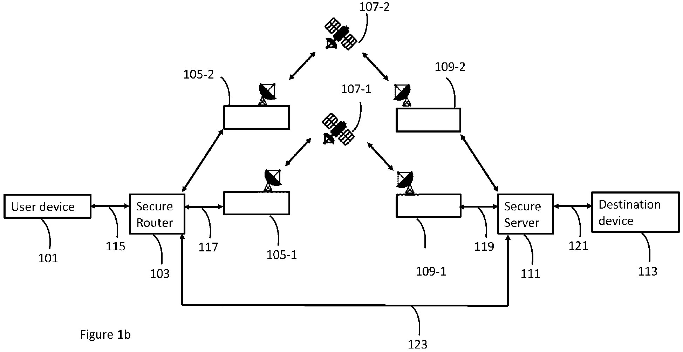

When transmitting data via the internet, if encryption is to be used, then a virtual private network (VPN) can be employed. VPNs tend to cause a small reduction in available bandwidth when implemented in terrestrial internet connections but tend to have a large detrimental effect when satellite communications are used. Much of this detrimental effect arises because of the large latency associated with transmission to and from a satellite. Thus, the architecture illustrated in Figure 1 is generally not suited to transmission of encrypted data using a VPN over the satellite link. Hence, in embodiments of the invention, encryption of transmitted data is achieved using a secure router 103 that employs a different encryption means as is explained below.

The user device 101 communicates 115 with the secure router 103 using one or more communications protocols that enable the transport of data. In general, any internet protocol can be used for this purpose.

In embodiments where the secure router 103 is located with the user device, for example within a private network on which the user device 101 is also present, then communications between the user device 101 and the secure router 103 need not be encrypted. Conversely, in embodiments where the user device 101 is remote from the secure router 103, data will typically be exchanged in encrypted form. Such encrypted exchanged can be accomplished using a VPN.

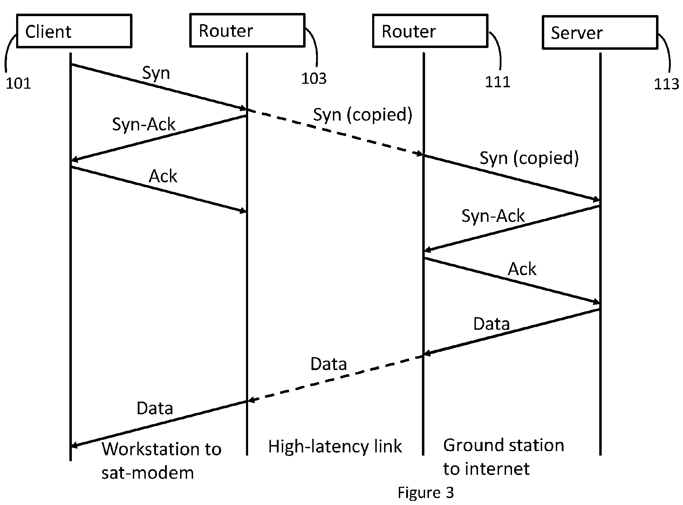

On receiving the data, the secure router 103 converts the data format to a general-purpose transport layer protocol, such as QUIC, and encrypts that data using an encryption method. In embodiments where the QUIC protocol is used, the data may be transmitted using User Datagram Protocol (UDP). In such embodiments, multiple streams of data can be multiplexed such that they are transmitted in a single QUIC stream. The secure router 103 can employ a secure Performance-enhancing Proxy (SPEP) to format and encrypt the data. Further details of the operation of the secure router 103 are explained below in relation to figure 3.

The encrypted data from the secure router 103 are transmitted 117 to the first ground station 105, then to the satellite 107 and subsequently to the second ground station 109. From the second ground station 109, the encrypted data are transmitted 119 to a secure server 111. The secure server 111 can include components essentially similar to those of the first secure router 103 and can perform decryption of the data and re-conversion back to, for example, TCP protocol. The secure server 111 also includes components for performing the task of a server device.

The secure server 111 then transmits 121 the decrypted data to the destination server 113. The secure server 111 can be located at the premises of the second ground station 109, at the premises where the destination server 113 is located, or at some other location. In some embodiments, the secure server 111 can form part of the destination server 113. In some embodiments, the secure server 111 can be cloud-based.

In embodiments where the secure server 111 is located with the destination server 113, for example within a private network on which the destination server 113 is also present, then communications between the secure server 111 and the destination server 113 need not be encrypted. Conversely, in embodiments where the destination server 113 is remote from the secure server 111, data will typically be exchanged in encrypted form. Such encrypted exchanged can again be accomplished using a VPN.

For data flow from the destination server 113 to the user device 101, the process described above is reversed.

Throughout this application, the term secure server 111 is used to describe the device receiving data from the second ground station 109. This is merely to differentiate the device from the secure router device 103 at the other side of the satellite link 107. However, typically the secure router 103 and the secure server 111 can be substantially the same and perform the same processing tasks. Each of the secure router 103 and secure server 111 will, in general, be capable of transmission and reception of data over the satellite link 107 using the ground stations 105, 107. Thus, the term "secure router" could equally be applied to the secure server 111. Moreover, each of the terms "secure router" and "secure server" could also be considered to merely be "nodes" in the described communication link.

Whilst figure 1a illustrates a satellite link between the secure router 103 and the secure server 111, other types of link are also possible. For example, a wireless data link, such as provided by a 5G connection can be employed. Alternatively, a fibre optic link or other type of wired data link can be employed. Moreover, the link can be provided in the form of multiple parallel links. For example, a plurality of satellite links can be employed and a mixture of different links including two or more of a satellite link, a 5G connection and a fibre optic link or other link can also be employed.

Figure 1b illustrates another example use scenario. Here, multiple communication links between the user device 101 and the secure server 111 are present. In addition to a first satellite link 107-1 using first and second ground stations 105-1 and 109-1, a second satellite link 107-2 is also employed. The second satellite link 107-2 typically uses additional ground stations 105-2 and 109-2. However, in alternative embodiments, one or both of the additional ground stations 105-2 and 109-2 can be the first 105-1 and second 109-1 ground stations. In other words, one ground station can be used to support more than one satellite link. Moreover, the satellite links 107-1 and 107-2 may, in some embodiments be configured to employ the same satellite. Also illustrated in Figure 1b is a terrestrial communication link 123 between the secure router 103 and the secure server 111. The terrestrial communication link 123 can comprise any terrestrial wired or wireless communication link, such a fibre optic, microwave, cellular wireless etc.

The example use scenario of figure 1b can function in an essentially similar manner to that described in relation to figure 1a. However, in the use scenario of figure 1b, the secure router 103 can employ any number, or all, of the communication links in order to communicate with the secure server 111. To communicate using the terrestrial line 123, data need not be transmitted via the ground stations 105-1, 105-2, 109-1 r 109-2. Rather, such data can use the terrestrial link 123 using known techniques, for example via the internet.

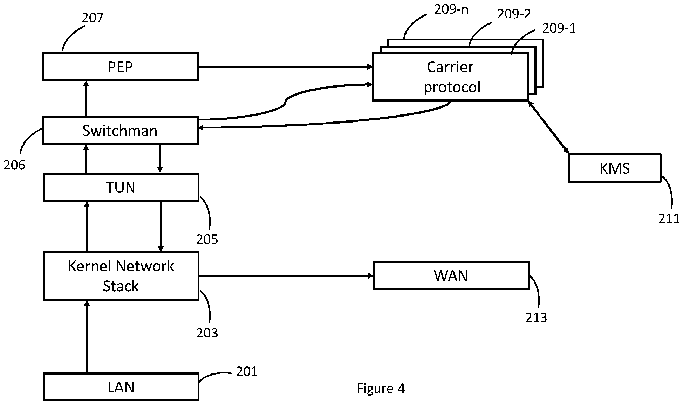

In order to select a particular communications link to use for communications between the secure router 103 and the secure server 111, each of the secure router 103 and the secure server 111 will comprise software and/or hardware that enable the support and selection of multiple communications links. This is described below in relation to figure 4.

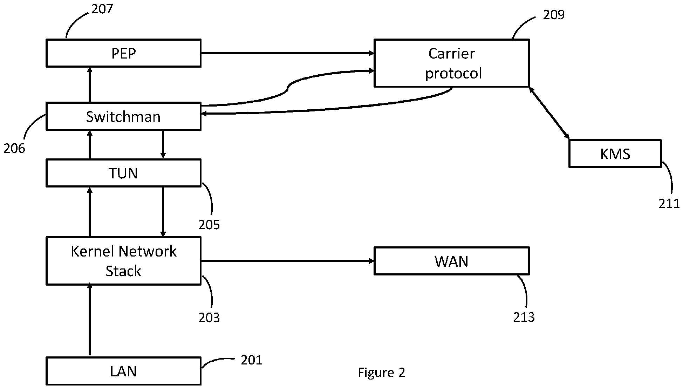

Figure 2 illustrates a system architecture of a secure router device 103 according to an embodiment of the invention. The secure router enables a Local Area Network, LAN, 201 to communicate with a Wide Area Network, WAN, 213. Thus, the secure router device 103 of figure 2 will receive user data from the user device 101 via the LAN connection and communicate with the ground station 105 via the WAN.

Thus, the secure router 103 will includes a WAN interface and a LAN interface, each either provided in hardware or software. The skilled person will recognise how to provide such interfaces in either hardware or software and so further details will not be provided here.

In the secure router of figure 2, a Kernel Network Stack, KNS, 203 is configured to receive data from LAN 201 and, after processing by the secure router 103, transmit the data to WAN 213. The skilled person will recognise that such transmission and reception will typically also be performed in reverse i.e. data from the WAN 213 can also be passed to the KNS 203 for processing by the secure router and subsequent transmission to the KAN 201.

The KNS 203 can be implemented in a hardware device such as a processor, such implementations are well known in the art and further description will not be provided here.

The KNS 203 is configured to exchange information with a network tunnel, TUN, 205. The skilled person will recognise that a TUN 205 will typically be implemented in software, and will also recognise the general functionality that a TUN 205 provides. Specifically, in the present disclosure, the TUN 205 is configured to exchange information with a performance enhancing proxy, PEP 207 and a carrier protocol module 209 via a swtichman 206.

The switchman 206 is configured to receive data packets from the TUN 205. For each of the received data packets, the switchman 206 will check which type of protocol is being used, e.g. UDP, TCP, QUIC, ICMP, etc. For all protocols except TCP, the packet is immediately forwarded to the carrier protocol module 209.

If the received protocol is detected to be TCP, the switchman 206 will verify whether the PEP 207 is enabled. If the PEP 207 is not enabled, the TCP packet is forwarded directly to the carrier protocol module 209.

Conversely, if the PEP 207 is enabled, then the TCP packet is deconstructed into its user data and its metadata. Here, the user data is the data that the original TCP packet was transporting, i.e. its payload, and the metadata is the data used to identify the TCP stream from which the packet came.

When a new TCP stream is received at the PEP 207, the metadata is encapsulated in a special carrier protocol frame and ultimately forwarded to the secure server 111. As a result, the remote server 111 can use the metadata to "imitate" the original TCP connection, but starting at the server side.

For subsequent TCP data packets received at the PEP 207, all user data is encapsulated and forwarded to the remote server 111. The skilled person will recognise that, on the remote server 111 side, the user data can then be decapsulated and forwarded to the original destination address using the imitated TCP connection, configured with the previously mentioned metadata.

Thus, with the PEP 207 enabled, the PEP 207 extracts the data from the header that it needs and only the payload is encapsulated. At the receiving end decapsulation of the paket is performed and the header will be re-added. By functioning in this manner, the header need not transmitted for most packets.

Conversely, for all protocols other than TPC (and also if the PEP 207 is disabled), the entire packet will be encapsulated.

The PEP 207 is configured to accelerate the TCP data packets using known techniques so as to increase the throughput of the TCP data packets, thereby accelerating the performance. An example of such techniques is described below with reference to figure 3.

After processing by the PEP 207, the reformatted TCP data packets are passed to the carrier protocol module 209. Moreover, as noted above, data packets other than those formatted using TCP protocol are passed by the switchman 206 directly to the Carrier Protocol module 209.

The KNS 203, TUN 205, Switchman 206, PEP 207 and Carrier Protocol module 209 are, in some embodiments, each implemented as software modules.

The carrier protocol module 209 acts to format the data packets received from the PEP 207 and the switchman 206 into a suitable transport layer carrier protocol for transmission over the WAN 213. In some embodiments, the carrier protocol is Quick UDP internet connection, QUIC. In other embodiments, the carrier protocol can be TCP, UDP or Wireguard, which is a variant of UDP. However, the invention is not limited to using any particular carrier protocol, and different carrier protocol modules can be provided to deal with each different carrier protocol that is to be used.

The carrier protocol module instance will then encapsulate the entire packet (including header and all) into the carrier protocol. In this case, there is no differentiation between user data (the payload of the packet) or metadata; the entire packet is encapsulated as a whole.

Typically, the carrier protocol module 209 will also encrypt the encapsulated data packets using a separate key management system, KMS 211. As illustrated in figure 2, a hardware KMS 211 can be employed to store encryption keys using a public-private key system. Using known processes, a key exchange will be performed between the secure router 103 at one end and the secure server 211 at the other. Subsequently, the KMS 211 will provide a symmetric session key that the carrier protocol module 209 can use for the communication session. The carrier protocol module 209 can then perform the encryption using the session key. In some embodiments, the encryption will be carried out prior to formatting the data packets into the desired carrier protocol. The skilled person will recognise that the private encryption key will remain within the KMS 211 so as to preserver the security of the private key. The skilled person will also recognise that other encryption techniques can also be applied by the carrier protocol module 209 and that such techniques may not require the presence of a hardware KMS 211.

The skilled person will recognise that the step of encryption is not essential and thus this can be omitted if desired.

Once formatted into a transport layer protocol, the data packets are then passed by the carrier protocol module 209 to the switchman 206 which passes them to the TUN 205. The TUN 205 forwards the packets to the KNS 203, which transmits them to the WAN 213.

By acting in this manner, the secure router device 103 of figure 2 can accelerate TCP packets and format all received data packets into packets having a suitable carrier protocol format for transmission via a WAN 213 and subsequently transmit the data packets over the WAN 213.

At the receiving end, the secure server 111 can be essentially the same as the secure router 103. The secure server 111 can perform the reverse of the processes performed in the secure router 111. Thus, data packets formatted in the selected carrier protocol are received at the WAN 213 and passed to the KNS 203. Subsequently, the KNS will pass the received data packets to the TUN 205 and this will pass them to the switchman 206 and on to the carrier protocol module 209. The carrier protocol module 209 will reformat the packets into their respective original formats. If encryption has been employed, then the carrier protocol module will decrypt the packets. The reformatted data packets will then be passed back to the TUN 205 via the switchman 206 or, in the case of TCP packets to the PEP 207 and subsequently on to the switchman 206 and then the TUN 205. The TUN 205 will pass the packets to the KNS 203 which will pass them to the LAN 201. The skilled person will recognise that the secure server 111 requires information to enable recognition that the packets received are from the secure router 103. This is achieved via known destination/source address filtering and the details will therefore not be explained here.

By adopting a modular approach to the construction of the secure router 103, 111, the secure router can operate in a flexible manner. If the user wishes to change the carrier protocol, then a different carrier protocol module 209 that provides the desired carrier protocol, can be selected. This means that only the carrier protocol module need be changed when reconfiguring the secure router 103, 111 for a different carrier protocol and so no changes to the other components of the secure router 103, 111 need be made and the other components of the secure router 103, 111 will also not require restarting or reinitialising.

Figure 3 illustrates an example functionality of the PEP 207. In figure 3, a client workstation (user device) 101 is configured to communicate with a first router 103, and this is in turn configured to communicate with a second router 111. Each of the first and second routers can include a PEP 207. The two routers communicate via a high-latency link, such as a satellite link. The second router 111 then communicates with a server (destination device) 113.

TCP employs a three-way handshake using messages as follows:
Syn is used to initiate and establish a connection,
Ack is used to confirm to the other side that is has received the Syn,
Syn-Ack is a Syn message containing both a Syn and an Ack of a previous packet.

In the absence of a PEP, TCP protocol is structured such that a transmitting device will transmit a data packet (Syn) and await an acknowledgement (SYN-ACK) from the receiving side. The transmitting device will then transmit an Ack to indicate that it has received the Syn-Ack. If the link includes a high latency component, as indicated by the central link in figure 3, then the time spent awaiting each of the Syn-Ack and ACK will be considerable and will thus impact on the link capacity. In the case of a link over geostationary satellites, such delays are often unworkable.

To combat this issue, a PEP 207 can be used. When using the PEP 207, the client device 101 can transmit a Syn packet to the first router 103 and the first router 103 can generate a Syn-Ack for the Syn packet. This Syn-Ack is treated by the client device 101 as if it came from the server 113, and so the client device 101 will then transmit an Ack to the first router 103.

The first router 103 will also transmit a copied version of the received Syn to the second router 111, and this will forward the copied Syn to the server 113. The server 113 will generate a Syn-Ack and, upon receipt of the Syn-Ack, the second router 111 will generate an Ack and transmit this to the server 113. This process establishes a connection between the client 101 and the server 113, and data packets can then be transmitted over the link from the server 113 to the client 101.

This method of operating a PEP is termed split-link since the overall link between the client device 101 and server 113 is split into separate links. Since the syn-ack and ack messages are generated by the first and second routers as described above, this process can reduce delay associated with awaiting these messages. In other words, the handshake procedure is performed on each side of the high-latency link but not across it.

If multiple TCP packets arrive at the PEP within a short timescale, then these can be concatenated and a single handshake performed for the concatenated packets.

Figure 4 illustrates a system architecture of a secure router device 103, 111 according to another embodiment of the invention. In the embodiment of figure 4, the LAN 201, KNS 203, WAN 213, TUN 205, Switchman 206 and KMS 211 can be essentially the same as the corresponding components of the embodiment of figure 2. Thus, the description of these components will not be repeated.

In the embodiment of figure 4, multiple instances of the carrier protocol module 209-1, 209-2, 209-n are instantiated in a parallel manner.

In the embodiment of figure 4, multiple physical communication links between the secure routers 103, 211 can be established. In general, for each communication link, there will be one instance of the carrier protocol module 209.

This is because, although the same carrier protocol may be used for each communication link, other factors such as congestion control algorithms and optimization can still differ between the communication links. Thus, each communication link will, in general have its own carrier protocol module instance 209 and its own path for data packets to flow through the secure router 103.

Thus, for example, if there are three communication links between the secure routers 203, 111, then there would be three instances of the carrier protocol module 209.

The three communication links in this example can be split based on the action of an external load balancing or network managing tool that is responsible for settings the routes of the communication links before they enter the TUN 205, for example.

For each communication link, the user can select which carrier protocol is applied. Based on this user selection, the instances of the Carrier protocol module 209-1, 209-2, 209-n are instantiated and associated with their respective communication links.

In some embodiments, the instance of the PEP 207 is conditional. Thus, the user may select whether to employ the instance of the PEP 207 with a particular connection. Moreover, different carrier protocols can also be selected by the user for each particular connection.

The actions of the LAN 201, KNS, 203, TUN 205 and KMS 211 are the same as the respective components as described in relation to figure 2, thus the description will not be repeated.

In a similar manner to the embodiment described in respect of Figure 2, the switchman 206 is configured to receive data packets from the TUN 205. For each of the received data packets, the switchman 206 will check which type of protocol is being used, e.g. UDP, TCP, QUIC, ICMP, etc. For all protocols except TCP, the packet is immediately forwarded to an assigned carrier protocol instance 209-1, 209-2, 2-9-n. Here, the assigning of which carrier is used for which communication link is dependent on the requirements of the link and of the user. This can be achieved using route-based filtration. The skilled person will recognise that route-based filtration is a known technique to classify packets. In such techniques, the headers of packets can be examined to determine the intended route for each packet. The swtichman 206 can then use this information to direct each packet to a desired carrier protocol module instances 209-1, 209-2, 209-n. The carrier protocol module instance 209-1, 209-2, 2-9-n will then encapsulate the entire packet, including header, into the carrier protocol connection. In this case, there is no differentiation between user data or metadata; the entire packet is encapsulated as a whole. Thus, the switchman 206 effectively defines different paths for data packets to travel through the secure router 103 dependent of the communication link, received protocol, congestion control algorithm applied and other parameters.

If the received protocol is detected to be TCP, the switchman 206 will verify whether the PEP 207 is enabled for the communication link from which the packet arrived. If the PEP 207 is not enabled for that communication link, the TCP packet is forwarded directly to the respective carrier protocol module instance 209.

Conversely, if the PEP 207 is enabled, then the TCP packet is deconstructed into its user data and its metadata. Here, the user data is again the data that the original TCP packet was transporting, i.e. its payload, and the metadata is the data used to identify the TCP stream from which the packet came.

When a new TCP stream is received at the PEP 207, the metadata is encapsulated in a special carrier protocol frame and ultimately forwarded to the secure server 111. As a result, the remote server 111 can use the metadata to "imitate" the original TCP connection, but starting at the server side.

For subsequent TCP data packets received at the PEP 207, all user data is encapsulated and forwarded to the remote server 111. The skilled person will recognise that, on the remote server 111 side, the user data can then be decapsulated and forwarded to the original destination address using the imitated TCP connection, configured with the previously mentioned metadata.

For each instance of the carrier protocol module 209-1, 209-2, 209-n, a different congestion control algorithm, CCA, can be applied. The selection of the CCA can be made via a user input in a similar manner to the selection of the carrier protocol.

Example CCAs include (New)Reno, Cubic & BBR. Other CCAs can also be used.

For this purpose, the secure router 103 can provide a user interface in which a carrier protocol, PEP functionality, congestion control algorithm, and/or encryption can be selected by a user for each physical communication link.

A use case example for the secure router is as follows. In a situation where the secure router 103 has established three physical connections (i.e. communication links) with a remote server 113 via the WAN 213, two of the connections could be satellite links while the third could be a 5G wireless connection. In such a scenario, the user may wish to select QUIC as the carrier protocol for each of the satellite connections and TCP as the carrier protocol for the 5G connection. Since the 5G connection is likely to experience a low latency, the user may select to disable the PEP for the 5G connection but use the PEP for the two satellite connections.

Based on these selections, the secure router 103 can instantiate three versions of the carrier protocol module 209. However, since the user wishes to disable the PEP 207 for the 5G connection, the PEP 207 is effectively bypassed for data relating to this connection by the secure router 103. This bypassing can be achieved by, for example, configuring the Switchman 206 to not forward TCP packets related to this connection to the PEP 207 as discussed above.

This ability to select whether to use the PEP 207 in any particular connection is beneficial since using a PEP 207 has an associated computational complexity and associated latency. If the latency associated with the PEP 207 is higher than the reduction in latency achieved by the action of the PEP on a particular connection (by the reduction round trips associated with the TCP handshake process), then there is no net benefit in using the PEP 207 on that connection.

To enable the user to select connections and/or to enable/disable the PEP for each connection, the secure router 103 can include a user interface with suitable user-selectable options.

However, the above example is not limiting and, in general any communication link can be configured to employ any carrier protocol and the action of the PEP can be enabled or disabled for each link.

However, in alternative embodiments, if different communication links are configured to employ the same carrier protocol, then the data from each link can be processed by the same carrier protocol module instance.

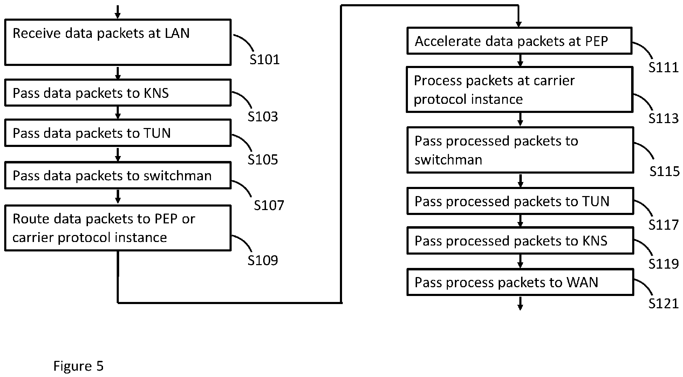

The general method of operation of the secure router according to the embodiments of figure 2 or 4 is illustrated in figure 5.

Data packets from a user device 101 are received S101 at the LAN connection 201, subsequently, the data packets are passed S103 to the KNS 203 and from the KNS 203 passed S105 on to the TUN 205. From the TUN 205, data packets are passed S107 to the switchman 206, which routes S109 the packets either to the PEP 207 or to a carrier protocol instance 209. Data packets that were routed to the PEP 207 will then be accelerated S111 by the PEP 207. All data packets are then processed S113 by a carrier protocol instance 209. Subsequently, the processed packets are passed S115 to the switchman 206, passed on S117 to the TUN 205, passed on S119 to the KNS 203 and passed on S121 to the WAN 213. As noted above, the receiving process is the reverse of this method of operation.

Figure65 illustrates further details of the method of operation of the secure router 103 according to figures 2 or 4. The secure router 103 is configured to establish S401 a connection between the secure router 103 and the server 111. For example, such a connection could take the form of a QUIC session that provides a data link between the secure router 103 and the secure server 111. In this example, the data link can be based on a QUIC transport-layer network protocol. However, as described above, other carrier protocols other than QUIC can also be used.

In this example, the key management system, KMS 211 takes the form of a hardware cryptoprocessor, 307. After establishment of the QUIC session, the cryptoprocessor 307 generates S403 a public-private cryptographic key pair. The skilled person will recognise how cryptoprocessors can be used to generate such key pairs, and so further explanation will not be provided here. The trigger to generate the key pair can be receipt of a message at the secure router 103 indicating that the user device 101 wishes to establish a communication link with the destination server 113. Although not illustrated, the secure server 111 will also generate a similar cryptographic key pair. The trigger to generate the key pair at the secure server 111 can be receipt of a message at the secure server 111 indicating that the user device 101 wishes to establish a communication link with the destination server 113.

The secure router 103 then transmits S405 the public key from the key pair to the secure server 111 via the QUIC session. Similarly (not illustrated), the secure server 111 transmits its public key to the secure router 103 via the QUIC session, and this is received S407 at the secure router 103.

Typically, steps S405 and S407 are referred together as a process of key exchange, and more particularly as a process of asymmetric key exchange.

The secure router 103 (and similarly the secure server 111) can each compute S409 a shared key using the receive public keys and their corresponding private keys using known methods. The router can then encrypt S411 payload data receive from the user device 101 using the shared key and transmit S413 the encrypted data using the QUIC session.

In the specific example where a QUIC session is used as the carrier protocol, firstly, the QUIC connection is launched between the client module and the server module. Th server module will provide a public IP address for this purpose.

Then, the QUIC module will generate a public-private key pair, using either the KMS or another cryptographic module. Afterwards, the TLS 1.3 handshake is performed. This handshake includes 3 messages that are exchanged between the client and the server:
1. A message that introduces that a TLS 1.3 handshake is being initiated, including a list of supported cipher suites, a guess of which key agreement / derivation protocol the server is most likely to select and the public key.
2. The server reacts with a message that confirms the TLS 1.3 handshake initialization, the selected key agreement / derivation protocol, its own public key and a closing message. The key share of the server also contains a cryptographic certificate, which can be used to verify the authenticity of the server.
3. Lastly, the client checks the server's certificate, and sends a closing message to the server. At the same time, both the client and the server derive a shared symmetric key using the selected key agreement protocol.

Subsequently, the QUIC connection encrypts all data using this shared symmetric key and forwards it through the QUIC tunnel.

As soon as a single carrier protocol module has finished its configuration, it can be used by the secure PEP to transfer data. If any carrier protocol module instance is subsequently added or removed, the switchman 206 will take this into consideration.

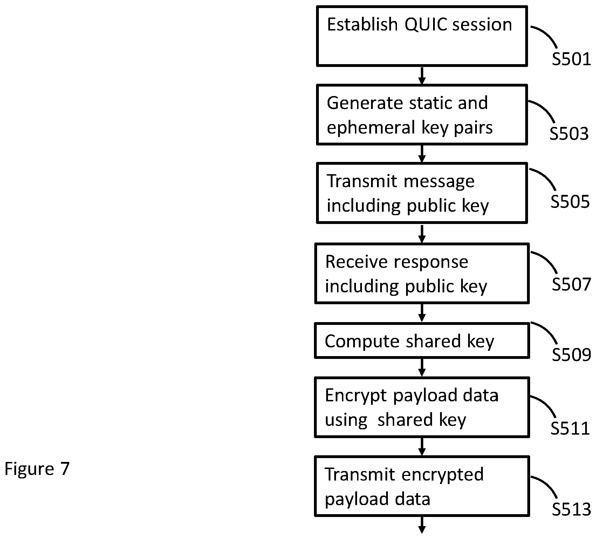

Figure 7 illustrates an alternative method of operation of the secure router 103 according to an embodiment. As with the previous example, the carrier protocol is described as being QUIC, but other carrier protocols can equally be used. The secure router 103 is configured to establish S501 a QUIC session that provides a data link between the secure router 103 and the secure server 111. The data link can be based on a QUIC transport-layer network protocol.

By using a QUIC session, the ISP of the satellite link that is employed need not install a PEP server at the gateway of the ISP to decapsulate encrypted traffic. Rather, the users of the satellite link need only QUIC tunnel their traffic through the ISP gateway for reception at the secure server 111.

The cryptoprocessor 307 then generates S503 an ephemeral public-private key pair and employs pre-shared certificates for authentication. The skilled person will recognise how cryptoprocessors can be used to generate such key pairs, and so further explanation will not be provided here. The trigger to generate the key pairs can be receipt of a message at the secure router 103 indicating that the user device 101 wishes to establish a communication link with the destination server 113. Although not illustrated, the secure server 111 will also generate similar static and ephemeral cryptographic key pairs. The trigger to generate the key pairs at the secure server 111 can be receipt of a message at the secure server 111 indicating that the user device 101 wishes to establish a communication link with the destination server 113.

The secure router 103 then transmits S505 the static public key and the ephemeral public key to the secure server 111 via the QU IC session. Similarly (not illustrated), the secure server 111 transmits its public static and public ephemeral keys to the secure router 103 via the QUIC session, and this is received S507 at the secure router 103.

The secure router 103 (and similarly the secure server 111) can each authenticate the other using the receive public static key and their corresponding private static key. The secure router 103 and secure server 111 can then compute S509 a shared key using the receive public ephemeral keys and their corresponding private ephemeral keys using known methods. The router can then encrypt S511 payload data receive from the user device 101 using the shared key and transmit S513 the encrypted data using the QUIC session.

Thus, in embodiments where both static and ephemeral keys are employed, the static keys can be used to provide a level of authentication that identifies the secure server 111 to the secure router 103 and vice versa. The ephemeral keys ensure that, if the static part is compromised after some transactions have taken place, then an eavesdropper will still not be able to derive the shared key since the ephemeral part will change between different sessions. This process is typically called forward secrecy. The skilled person will be familiar with the process of forward secrecy and so further explanation will not be provided here.

In some embodiments, TLS protocol version 1.3 is employed when the secure router 103 and secure server 111 first communicate with each other in a session. In such embodiments, the handshake protocol can be used to permit the secure router 103 and secure server 111 to negotiate a protocol version, select a cryptographic algorithm, authenticate each other and establish the shared secret key. In some embodiments that use TLS 1.3, a key exchange mode employing pre-shared key (PSK) (the static key) and elliptic curve Diffie-Hellmann exchange (EC(DHE)) (the ephemeral key) is employed.

In some embodiments the EC(DHE) can comprise the X25519 or P-256 key exchange algorithms. In such embodiments, owing to the limited set of choices available, the secure router 103 can choose to send Diffie-Hellmann key shares on the first trip in the handshake process. By doing this, the secure server 111 can learn the shared key and transmit encrypted data one round trip earlier than would otherwise be possible. Thus, such embodiments permit a more efficient process for establishing secure communications.

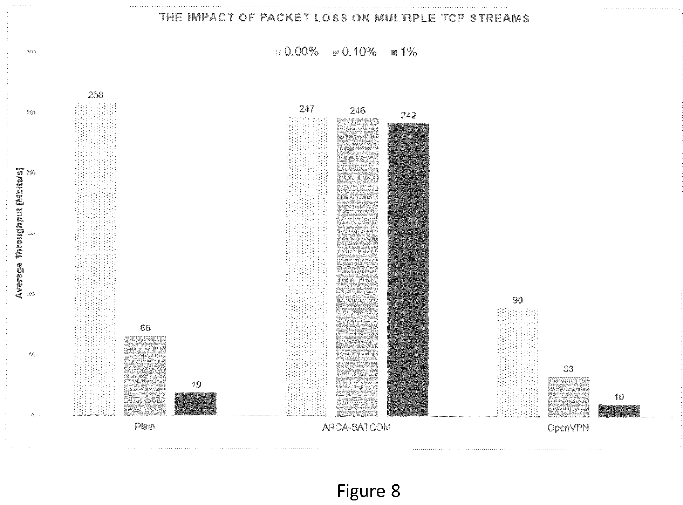

Figure 8 illustrates examples of the simulated throughput performance of a system operating according to the embodiment of figure 2, in other words, using a single communication link between a secure router and a secure server. In the example of figure 2, the communications link is effected using a Low Earth orbit satellite.

The performance of the system of figure 2 is indicated in figure 8 as ARCA-SATCOM. The columns labelled "Plain" indicate performance over the same link using a standard TCP stream, and the columns labelled OpenVPN illustrate the performance using Open VPN to accelerate the TCP stream.

For each set of columns, the simulate performance with no packet loss, 0.1% packet loss and 1% packet loss are provided.

As can be seen from Figure 8, at zero packet loss, the Plain system has the largest throughput, while the system of figure 2 has a similar performance. The throughput of OpenVPN is much lower since the VPN will suffer from the latency of the satellite link.

As the packet loss increases, the performance of both the plain system and the OpenVPN are greatly reduced since neither system can employ a carrier protocol that is capable of dealing with packet loss in a suitable manner. In contrast, the system of figure 2 can employ a suitable carrier protocol and so the throughput is greatly reduced by the packet loss.

Embodiments can include features that are embedded in a computer program product, which, when loaded in an information processing system, is able to carry out the methods described. Computer program means or computer program in the present context mean any expression, in any language, code or notation, of a set of instructions intended to cause a system having an information processing capability to perform a particular function either directly or after conversion to another language. Such a computer program can be stored on a computer or machine-readable medium allowing data, instructions, messages or message packets, and other machine readable information to be read from the medium. The computer or machine-readable medium may include non-volatile memory, such as ROM, Flash memory, Disk drive memory, CD-ROM, and other permanent storage. Additionally, a computer or machine-readable medium may include, for example, volatile storage such as RAM, buffers, cache memory, and network circuits. Furthermore, the computer or machine-readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method of providing a data connection to a remote device, the method comprising:
receiving (S101) incoming user data packets at a layer 2 LAN networking interface;
forwarding (S107), by a network tunnel, TUN, interface (205) the user data packets to a one or more carrier protocol module instances (209), wherein the each carrier protocol module instance is selected from a plurality of carrier protocol modules, wherein each carrier protocol module instance is configured to encode data with a specific carrier protocol;
processing (S113) data packets at each carrier protocol module instance, wherein the processing comprises:
deconstructing the received data packets, and
encapsulating the packet data into a data packet corresponding to the carrier protocol of the selected carrier protocol instance;
forwarding (S117) the encapsulated packets to the TUN interface; and
forwarding (S121), the encapsulated packets to a wide area network, WAN (213).

2. The method of claim 1, further comprising:
forwarding (S107), by the network tunnel, TUN, interface (205) the data packets to a switchman interface (206), wherein the switchman interface (206) is configured to pass (S109) TCP-encoded data packets to a performance-enhancing proxy, PEP, module (207) and to pass data packets with encoding other than TCP to a carrier protocol module instance (209);
processing (S111) TCP-encoded data packets by the PEP module (207); and
forwarding the processed packets to a carrier protocol module instance (209).

3. The method of claim 2, wherein data packets other than TCP-encoded data packets are encapsulated with metadata that identifies a communication link for the data packets.

4. The method of claim any preceding claim further comprising encrypting, by a carrier protocol module instance (209), the encapsulated packets using a key management system, KMS (211).

5. The method of claim 2 or 3, wherein a plurality of carrier protocol module instances (209-1, 209-2, 209-n) are instantiated, and each instance of the carrier protocol module is configured to communicate with the switchman interface (206)via a communication path defined by the switchman interface (206).

6. The method of claim 5, wherein the carrier protocol used by each carrier protocol module instance is user-selectable.

7. The method of claim 5 or 6, wherein the PEP module (207) is capable of being selectively disabled for each communication path via a user selection.

8. The method of any preceding claim, further comprising:
forwarding (S103) incoming user data packets to a Kernel Network Stack (203),
forwarding (S105), by the kernel network stack (203), the user data packets to the TUN interface (205), and
forwarding (S121), by the kernel network stack (203), the encrypted encapsulated packets to the WAN (213).

9. The method of claim 2, wherein the processing by the PEP module (207) includes acceleration of the TCP-encoded data packets.

10. The method of claim 4, wherein the KMS (211) is implemented in a hardware cryptoprocessor.

11. The method of any preceding claim, wherein the WAN (213) comprises one or more of a geostationary, GEO, satellite link a low-earth orbit, LEO, satellite link a medium-earth orbit, MEO, satellite link, a cellular wireless connection, and a fibre-optic link.

12. The method of claim 5 or 6, wherein a congestion control algorithm applicable to each carrier protocol module instance (209-1, 209-2, 209-n) is user-selectable.

13. A computer program product comprising computer readable instructions which, when implemented on a system comprising a processor, performs all of the steps of the method of any of claims 1-12.

14. A computer readable medium comprising the computer program of claim 13.

15. A communication device for providing a data connection to a remote device, the communication device comprising:
a layer 2 LAN networking interface;
a wide area network, WAN, interface; and
a processor configured to instantiate a network tunnel, TUN, interface (205) and one or more carrier protocol module instances (209), wherein
the communication device is configured to receive incoming user data packets at the LAN networking interface; and wherein the processor is configured to:
forward, by the TUN interface (205) the user data packets to the one or more carrier protocol instances (209), wherein the each carrier protocol module instance is selected from a plurality of carrier protocol instances, wherein each instance is configured to encode data with a specific carrier protocol;
process data packets at each carrier protocol module instance (209), wherein the processing comprises:
deconstructing the received data packets, and
encapsulating the packet data into a data packet corresponding to the carrier protocol of the selected carrier protocol instance;
forward the encapsulated packets to the TUN interface (205); and
forward the encapsulated packets to the WAN interface.
